Europäisches Patentamt

European Patent Office

Office européen des brevets

(19)

(11) Numéro de publication: **0 381 903**
**A1**

(12) **DEMANDE DE BREVET EUROPEEN**

(21) Numéro de dépôt: **89402063.5**

(22) Date de dépôt: **20.07.89**

(51) Int. Cl.5: **E01C 7/18, E01C 11/22**

(30) Priorité: **10.02.89 FR 8901741**

(43) Date de publication de la demande:
**16.08.90 Bulletin 90/33**

(84) Etats contractants désignés:
**AT BE CH DE ES GB GR IT LI LU NL SE**

(71) Demandeur: **BEUGNET, Société dite.**
**66 Avenue des Champs Elysées**
**F-75008 Paris(FR)**

(72) Inventeur: **Sainton, Alain**
**9 rue des Alouettes**
**Abbevile La Rivière (Essonnne)(FR)**

(74) Mandataire: **Cabinet Pierre HERRBURGER**
**115, Boulevard Haussmann**
**F-75008 Paris(FR)**

(54) **Enrobé à base de granulat de gros calibre et de liant hydrocarboné pour la construction des assises de chaussées, ainsi que chaussée poreuse notamment chaussée drainante et anti-bruit obtenue à partir d'un tel enrobé.**

(57)

a) Enrobé à base de granulat de gros calibre et de liant hydrocarboné pour la construction des assises de chaussées, ainsi que chaussée notamment chaussée poreuse notamment chaussée anti-bruit obtenue à partir d'un tel enrobé,

b) enrobé caractérisé en ce qu'il comporte un volume de vide important de l'ordre de 20 à 50 %, une faible quantité, de l'ordre de 2 à 5 % d'un liant hydrocarboné dont la pénétrabilité à 25°C est environ comprise entre 60 et 300 1/10 de mm de préférence, entre 60 et 200 1/10 de mm, et est réalisé à partir d'un granulat de très grosse granularité définie par le rapport d/D dans lequel d correspond aux particules de plus petit diamètre et D aux particules de diamètre supérieur, ce granulat satisfaisant aux relations :
d > 6 mm et D ≤ 60 mm.

c) L'invention concerne un enrobé à base de granulat de gros calibre et de liant hydrocarboné pour la construction des assises de chaussées.

EP 0 381 903 A1

## Enrobé à base de granulat de gros calibre et de liant hydrocarboné pour la construction des assises de chaussées, ainsi que chaussée poreuse notamment chaussée drainante et anti-bruit obtenue à partir d'un tel enrobé

La présente invention se rapporte à un enrobé destiné à la fabrication des assises de chaussées, et constitué par des granulats et par un liant hydrocarboné.

Les enrobés hydrocarbonés sont couramment utilisés depuis plusieurs décennies pour la fabrication des chaussées et sont notamment améliorés du point de vue de la formulation, afin d'offrir aux usagers, un maximum de garantie, au niveau de la sécurité tout en ayant une durée de vie importante et des caractéristiques constantes dans le temps.

Dans ce but, il y a quelques dizaines d'années, on optait, en vue d'obtenir la meilleure résistance mécanique possible, pour des enrobés très denses, donc ayant un faible volume de vide, qui contenaient, en tant que liants hydrocarbonés, des bitumes relativement mous. On s'est aperçu, consécutivement à l'augmentation de la circulation automobile, et en particulier du trafic poids-lourds, que de tels enrobés étaient très sujets au fluage et à l'orniéra ge.

Pour résoudre ce problème, on a tenté de remplacer ces enrobés denses par des enrobés dits "grenus" c'est-à-dire dont le volume de vide était supérieur à 10 %, et qui étaient fabriqués à partir de bitumes plus durs, donc plus rigides, et de matériaux de plus grosse granularité provenant de roches massives concassées. Ces enrobés ne permirent pas cependant de résoudre tous les problèmes, notamment dans les régions dites "froides" où l'on assista à une dégradation par "pelade", c'est-à-dire au désenchassement des granulats de la structure, sous l'effet conjugué de la circulation et des contraintes hivernales.

La présente invention a pour objet de proposer un enrobé pour la construction des assises de chaussées susceptible de remédier aux inconvénients susmentionnés et d'un prix de revient peu élevé et particulièrement résistant aux effets du vieillissement.

A cet effet, l'invention concerne un enrobé du type ci-dessus caractérisé en ce qu'il comporte un volume de vide important de l'ordre de 20 à 50 %, une faible quantité, de l'ordre de 2 à 5 %, d'un liant hydrocarboné dont la pénétrabilité à 25° C est environ comprise entre 60 et 300 1/10 de mm, de préférence entre 60 et 200 1/10 de mm et est réalisé à partir d'un granulat de très grosse granularité définie par le rapport d/D dans lequel d correspond aux particules de plus petit diamètre et D aux particules de diamètre supérieur, ce granulat satisfaisant aux relations :

$d > 6$ mm et $D \leq 60$ mm.

Le liant hydrocarboné peut, bien entendu, être quelconque, notamment être constitué par un liant préalablement modifié par du caoutchouc, des résines, des déchets plastiques, des fibres minérales ou synthétiques, des extraits de houille, de la poudre d'asphalte, des polymères notamment des matières thermoplastiques, des élastomères des polyisoprènes, poly-chloroprènes, poly-butadiènes, des polymères éthylène propylène, éthylène acétate de vinyl, butadiène styrène, des terpolymères éthylène propylène - autres diènes copolymérisables, styrène butadiène styrène, styrène isoprène styrène, etc...

Les éléments granulaires, dont la granularité est nettement supérieure à celle des éléments classiquement utilisés (dont le rapport d/D est de l'ordre de 0/14) peuvent provenir de roches peu onéreuses ; on peut ainsi utiliser, en fonction du trafic des matériaux grossiers et peu élaborés qui étaient jusqu'à présent destinés à retourner en chaîne de concassage.

L'économie ainsi réalisée est encore augmentée par la faible quantité de liants mis en oeuvre qui est presque égale à la moitié de la quantité usuellement utilisée.

Cependant, et malgré cette faible quantité totale de liant, étant donné la grosse granularité de l'enrobé conforme à l'invention, et donc sa faible surface spécifique, l'épaisseur du film de liant sur les granulats est nettement supérieure à celle des enrobés classiques (200 à 300 $\mu$m) ; cette grande épaisseur permet, par opposition aux enrobés classiques dans lesquels on a un film très mince, d'obtenir une résistance au vieillissement (UV, facteurs climatiques ...) et au désenrobage bien meilleure.

Par ailleurs, l'importance du volume de vide a pour conséquence, outre l'économie de liant et de matière réalisée, de permettre l'obtention d'une couche drainante dans laquelle l'eau peut circuler.

En outre, la grande quantité d'air emprison né du fait de la présence des vides confère à cette couche un bon coefficient de protection thermique.

Il convient, par ailleurs, de noter que l'effet d'enchevêtrement des gros éléments confère à l'enrobé conforme à l'invention un pouvoir structurel élevé.

De plus, l'important pourcentage de vide associé à la faible teneur en liant est de nature à empêcher la remontée des fissures, qu'elles aient pour pour origine la fatigue ou le retrait hydraulique du matériau de la couche support.

Il peut être nécessaire, suivant l'appareillage, d'ajouter une fraction de sable de 0 à 10 % ayant une granularité comprise entre 0 et 6 mm.

En outre, il peut être nécessaire d'ajouter au granulat 0 à 5 % de fines ou "filler" constitués d'éléments dont la granularité est inférieure à 80 μm dans le but d'améliorer la maniabilité du mélange et d'épaissir le film de liant. Il est à noter qu'une partie de ces fines peut provenir du sable d'ajout.

De manière classique, l'enrobé conforme à l'invention peut être préparé à chaud ou à froid.

Dans le cas d'un enrobé préparé à chaud et suivant une autre caractéristique de l'invention, on met en oeuvre un bitume classique adapté ou modifié à une température d'enrobage de l'ordre de 110 à 200°C.

Les bitumes modifiés peuvent bien entendu être constitué par les bitumes susmentionnés, c'est-à-dire modifiés par du caoutchouc, des résines, etc ...

Dans le cas d'un enrobé préparé à froid, il est possible, conformément à l'invention, de mettre en oeuvre plusieurs types de liant :
- des liants de type émulsion cationique ou anionique eau/bitume contenant 50 à 70 % de bitume résiduel (c'est-à-dire de bitume restant après évaporation),
- des liants de type classiquement nommé "cut back", c'est-à-dire constitués d'un bitume ou d'un dérivé de houille fluidifié par des huiles et/ou des solvants.

Dans ces deux cas, le liant résiduel, c'est-à-dire après évaporation de l'eau ou des fractions les plus légères, présente bien entendu une pénétrabilité à 25°C environ comprise entre 60 et 300 1/10 de mm.

Par ailleurs, et suivant une autre caractéristique de l'invention, dans le cas d'en enrobage à froid, il est nécessaire de doper le liant dans la masse et/ou les granulats préalablement au malaxage, à l'aide d'une solution aqueuse à base de composés aminés.

Ce dopage a pour but de favoriser l'adhésivité et le collage liant/granulat (dopage d'interface).

L'invention se rapporte également à une chaussée poreuse, notamment une chaussée drainante et anti-bruit obtenue à partir de l'enrobé susmentionné.

En effet, si l'on superpose à l'enrobé susmentionné une couche de roulement drainante à volume de vide important, de l'ordre de 15 à 30 %, et constituée par l'association d'un liant hydrocarboné et d'un granulat de granularité relativement importante, mais cependant moindre que celle de la couche d'assise, on peut obtenir un complexe de chaussée à vocation drainante, anti-bruit et anti-remontée de fissures.

En effet, par ses caractéristiques drainantes liées à l'important pourcentage de vide, la chaussée conforme à l'invention, permet d'éliminer la présence de tout film d'eau superficiel, et donc, d'augmenter l'adhérence des véhicules et d'améliorer la visibilité des conducteurs par suppression des projections d'eau et diminution du réfléchissement de la lumière des phares.

En fait, l'utilisation pour la fabrication des couches d'assise de l'enrobé particulier susmentionné permet d'accentuer la "drainabilité" d'une couche de roulement drainante classique par un effet de "réservoir" consécutif à l'important volume de vide.

D'autre part, l'important pourcentage de vide de la chaussée permet l'absorption d'une partie importante des bruits engendrés par le trafic qu'il s'agisse de bruits de roulement ou de moteurs.

Bien entendu, la couche de roulement de par sa porosité parachève l'action anti-fissures susmentionnée des enrobés.

Conformément à l'invention, la granularité du granulat constitutif de la couche de roulement, généralement discontinue, est le plus souvent limitée à 20 millimètres ; le liant peut être choisi dans la liste susmentionnée des liants pouvant être utilisés pour la fabrication de l'enrobé constitutif de la couche d'assise. L'expérience a, cependant, montré que l'on obtenait des résultats particulièrement avantageux, notamment du point de vue de la souplesse à basse température, de la résistance à la fatigue et de la tenue au vieillissement en utilisant un liant constitué par un bitume modifié par du caoutchouc tel que par exemple celui décrit dans le brevet FR 87 11 982.

Par ailleurs, pour que la chaussée susmentionnée (constituée par la couche de roulement et la couche d'assise) puisse donner entière satisfaction, il est essentiel que celle-ci repose sur un support imperméable de nature à permettre un guidage de l'eau percolée vers les bords de la chaussée.

Selon l'invention, ce support peut être constitué par un enrobé très dense, de densité environ comprise entre 2 et 2,6, assurant l'étanchéité et conférant à l'ensemble de la chaussée une structure multicouche dont chaque couche répond à des contraintes mécaniques spécifiques.

Une membrane épaisse gravillonnée peut néanmoins assurer la seule fonction d'étanchéité.

Les caractéristiques de la chaussée qui fait l'objet de l'invention seront détaillées grâce aux exemples de réalisation suivants :

| EXEMPLE 1 : enrobé | | |
|---|---|---|
| Granulats | | |
| granularité : | 6/20 mm | 15 % |
| | 20/40 mm | 76 % |
| | 0/2 mm | 8 % |
| | filler | 1 % |
| Bitume | 120/130 | 2,5 % |
| | % de vide | 35 % |
| EXEMPLE 2 : couche de roulement | | |
| Granulats | | |
| granularité : | 6/10 mm | 88 % |
| | 0/2 mm | 11 % |
| | filler | 1 % |
| Liant bitume - caoutchouc | | |
| conforme au brevet FR 87 11 982 | | 6,6 % |
| | % de vide | 20 % |
| EXEMPLE 3 : couche support | | |
| Granulats | | |
| granularité : | 4/10 mm | 42 % |
| | 0/4 mm | 55 % |
| | filler | 3 % |
| Bitume | 80/100 | 6,5 % |
| | % vide | $\leq$ 8 % |

**Revendications**

1°) Enrobé destiné à la fabrication des assises de chaussées et constitué par des granulats et par un liant hydrocarboné, enrobé caractérisé en ce qu'il comporte un volume de vide important de l'ordre de 20 à 50 %, une faible quantité, de l'ordre de 2 à 5 % d'un liant hydrocarboné dont la pénétrabilité à 25°C est environ comprise entre 60 et 300 1/10 de mm de préférence, entre 60 et 200 1/10 de mm, et est réalisé à partir d'un granulat de très grosse granularité définie par le rapport d/D dans lequel d correspond aux particules de plus petit diamètre et D aux particules de diamètre supérieur, ce granulat satisfaisant aux relations : d > 6 mm et D $\leq$ 60 mm.

2°) Enrobé selon la revendication 1, caractérisé en ce qu'il contient 0 à 10 % de sable de granularité comprise entre 0 et 6 mm.

3°) Enrobé selon l'une quelconque des revendications 1 et 2, caractérisé en ce qu'il contient 0 à 5 % de fines constitués d'éléments dont la granularité est inférieure à 80 $\mu$m.

4°) Enrobé préparé à chaud selon l'une quelconque des revendications 1 à 3, caractérisé en ce qu'il est préparé à partir d'un bitume classique adapté ou modifié à une température d'enrobage de l'organe de 110 à 200°C.

5°) Enrobé préparé à froid selon l'une quelconque des revendications 1 à 3, caractérisé en ce qu'il est préparé à partir d'une émulsion cationique ou anionique eau/bitume contenant 50 à 70 % de bitume résiduel.

6°) Enrobé préparé à froid selon l'une quelconque des revendications 1 à 3, caractérisé en ce qu'il est préparé à partir d'un bitume ou d'un dérivé de houille fluidifié par des huiles et/ou des solvants.

7°) Enrobé selon l'une quelconque des revendications 5 et 6, caractérisé en ce que le liant et/ou les granulats ont, préalablement au malaxage, été dopés à l'aide d'une solution aqueuse à base de composés aminés.

4

8°) Chaussée poreuse notamment chaussée drainante et anti-bruit obtenue à partir d'un enrobé selon l'une quelconque des revendications 1 à 7, caractérisée en ce qu'elle comporte une oouche de roulement à volume de vide important, de l'ordre de 15 à 30 %, et constituée par l'association d'un liant hydrocarboné et d'un granulat de granularité relativement importante.

9°) Chaussée selon la revendication 8, caractérisée en ce que le liant hydrocarboné est constitué par un bitume modifié par du caoutchouc.

10°) Chaussée selon l'une quelconque des revendications 8 et 9, caractérisée en ce qu'elle comporte, en fond de couche, une couche support imperméable constituée par un enrobé très dense, de densité environ comprise entre 2 et 2,6.

11°) Chaussée selon l'une quelconque des revendications 8 à 9, caractérisée en ce qu'elle comporte en fond de couche une membrane épaisse constituée par l'association d'un bitume fluidifié et de gravillonnage.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | BITUMEN vol. 50, no. 3, 1988, pages 112-116, Hamburg, DE; A. TAPPERT: "Stand der Erfahrungen mit lärmmindernden Belägen" * pages 112-116 * | 1-4,8,9 ,11 | E 01 C 7/18 E 01 C 11/22 |
| A | BITUMEN vol. 50, no. 3, 1988, pages 98-107, Hamburg, DE; E. NAKKEL: "XVIII. Weltstrassenkongress in Brüssel - 2. Teil: Strassenbestandserhaltung weltweit wachsender Strassenverkehr weltweiter Erfahrungsaustausch" * pages 104-107 * | 1-3,8,9 ,11 | |
| A | DE-A-2 434 417 (SHELL INTERNATIONALE RESEARCH MAATSCHAPPIJ B.V.) * pages 1-7 * | 1,8 | |

DOMAINES TECHNIQUES RECHERCHES (Int. Cl.5)

E 01 C

Le présent rapport a été établi pour toutes les revendications

| Lieu de la recherche | Date d'achèvement de la recherche | Examinateur |
|---|---|---|
| BERLIN | 03-05-1990 | PAETZEL H-J |

EPO FORM 1503 03.82 (P0402)